# DEMANDE DE BREVET EUROPEEN

(11) **EP 1 388 799 A2**
(43) Date de publication de la demande: **11.02.2004**
(21) Numéro de dépôt: 03291509.2
(22) Date de dépôt: 20.06.2003
(51) Int. Cl.: G06F 17/60

(54) **Portail et procédé de mise en relation d'entrepreneurs et d'aide à la réalisation d'accords entre les entrepreneurs**

(30) Priorité: 05.08.2002 FR 0209918
(71) Demandeur: FRANCE TELECOM, 75015 Paris (FR)
(72) Inventeur: Bouron, Thierry, 78700 Conflans Ste Honorine (FR); Pierre, Denis, Bureau D.A. Casalonga - Josse, 80336 München (DE)
(74) Mandataire: Casalonga, Axel

(57) **Abrégé**

Ce portail de mise en relation d'entrepreneurs et d'aide à la réalisation d'accords entre les entrepreneurs comprend un intergiciel (14) adapté pour la mise en communication du portail avec des registres de services accessibles par l'intermédiaire d'un réseau informatique dans lesquels sont stockées des informations relatives à des prestations proposées par des entrepreneurs prestataires et une plate-forme (12) de recherche de prestataires et d'élaboration de propositions en réponse à des requêtes d'appel d'offres formulées par des utilisateurs.

La plate-forme de recherche (12) est une plate-forme d'agents logiciels dont les agents sont associés respectivement à une partie au moins des entrepreneurs et aux utilisateurs et sont adaptés pour rechercher un ou plusieurs prestataires correspondant à une requête formulée par un utilisateur et pour l'établissement conjoint d'un accord entre un utilisateur et le ou chaque prestataire correspondant à la requête.

## Description

L'invention concerne un portail et un procédé de mise en relation d'entrepreneurs et d'aide à la réalisation d'accords entre les entrepreneurs,.

Plus particulièrement, l'invention porte sur un portail et un procédé favorisant, grâce à un réseau Internet la réalisation de transactions entre un prestataire et un tiers utilisateur.

Une application particulière de cette invention se situe dans le contexte des places de marché du travail permettant de mettre en relation des offres de service ou de compétence formulées par des prestataires et des demandes de prestations formulées par des tiers utilisateurs.

La quantité grandissante d'informations disponibles sur le réseau Internet rend la recherche de ces informations relativement difficile à réaliser. Ce problème se pose par exemple lorsque l'on recherche un service ou un prestataire offrant la meilleure prestation. Lorsque que l'on utilise un moteur de recherche ou un annuaire de service, il convient de formuler une requête de sorte que les résultats obtenus soient les plus pertinents possibles de manière à éviter d'effectuer une discrimination entre les résultats qui correspondent effectivement à l'objet de la requête, et ceux qui y sont étrangers, et ce parmi un nombre très important de résultats.

Les moteurs de recherche et les annuaires de services sont actuellement accessibles par des portails via des pages HTML ou XML, permettant l'expression de requêtes manuelles ou des navigations saisies manuellement. L'accès à ces moteurs et annuaires par des programmes informatiques pour automatiser les recherches de produits ou services est peu robuste. Il suffit en effet, par exemple, qu'un détail de présentation soit changé pour que le programme ne fonctionne plus.

Dans le cadre des infrastructures de commerce électronique inter-entreprises (B2B), afin de faciliter la mise en relation d'offres de service ou de compétences et de demandes de prestations, certains industriels ont adhéré à des protocoles de communication permettant de communiquer en utilisant des services Web, c'est-à-dire des composants logiciels qui communiquent entre eux au moyen de technologies basées sur des standards Internet. On pourra à cet égard se référer à l'intergiciel SOAP («Simple Object Access Protocole», en anglais) qui définit un protocole de communication s'appuyant sur le langage de balisage extensible (XML, «extensible Markup Language», en anglais) et sur le protocole HTTP et supportant des appels de procédures distants. On pourra également se référer aux annuaires UDDI («Universal Description, Discovery and Integration», en anglais), qui sont des structures de registres constituant un annuaire mondial en ligne référençant l'ensemble des services Web disponibles, ainsi que sur le langage WSDL («Web Service Description Language», en anglais), qui est une grammaire définissant selon quelles syntaxes il convient de décrire des requêtes pouvant être acceptées par un service Web, qui ont été développées afin de faciliter la mise en communication de prestataires et de clients.

Ainsi, selon les portails conventionnels de mise en relation d'entrepreneurs et d'aide à la réalisation d'accords utilisant de tels services Web, des structures de registre UDDI et ebXML sont utilisées pour l'enregistrement d'informations sur des services offerts par des prestataires et des informations sur les processus d'échange à suivre pour utiliser ces services. En outre, ces portails sont associés à des interfaces accessibles respectivement par les prestataires pour l'enregistrement d'offres de prestations et de modalités concernant ces prestations dans la structure de registre UDDI et par les clients pour la recherche de prestataires capables d'offrir une prestation suivant des modalités données.

De façon optionnelle, les documents stockés dans la structure de registre peuvent être classés selon une classification arborescente, de manière à faciliter la recherche.

En outre, des moteurs de recherche et outils de navigation peuvent être utilisés pour faciliter le parcours de l'arborescence pour rendre plus efficace la recherche de prestataires.

Cependant, en ce qui concerne les services Web, les infrastructures proposées aux prestataires et aux clients ont des fonctionnalités de recherche relativement pauvres, dans la mesure où elles consistent essentiellement à formuler des réponses à des demandes de produits ou services faites par un client, se présentant sous une forme de liste de prestataires capables de fournir tels produits ou services.

Par ailleurs, dans le domaine du commerce électronique en général, certaines infrastructures, basées sur des agents logiciels ou intelligents, offrent des fonctionnalités plus riches, telles que le lancement d'appels d'offre, la décomposition de domaines en sous domaines, l'automatisation plus ou moins poussée de négociations...

On pourra à cet égard se référer par exemple au document intitulé « Magma : An agent-based virtual market for electronic commerce; Applied Artificial intelligence, 22 Avril 1996, XP002079276, page 501 », qui décrit une place de marché électronique simulant un marché réel, destinée à faciliter la réalisation d'actes de commerce entre client et un vendeur et utilisant des agents logiciels pour modéliser les clients et la réalisation de transactions en réalisant une interface avec un organisme bancaire, au document WO0217089 portant sur l'utilisation d'un agent intelligent pour identifier un produit ou service par rapport à un choix d'un utilisateur, ou encore au document WOUS0015481 qui décrit un système d'appel d'offre et de gestion de contrats utilisant également des agents logiciels. Certaines de ces plate-formes agents sont connectées en réseau et interopèrent tel que dans agentcities mais leur déploiement reste limité. On se retrouve par conséquent dans la situation suivante :d'une part il existe des services XML et des services Web avec des fonctionnalités limitées en passe d'être déployés au niveau mondial via le Web. D'autre part, il existe des plate-formes d'agents aux fonctionnalités plus riches mais au déploiement restreint.

Bien que capables de fournir des fonctionnalités accrues en raison de l'utilisation d'agents logiciels, ces infrastructures de commerce électronique ne peuvent être appliquées à des infrastructures de commerce électroniques connues à ce jour qui sont basées sur des services Web.

Le but de l'invention est donc de pallier cet inconvénient et de fournir une infrastructure de commerce électronique inter-entreprises de type service Web de puissance accrue, c'est-à-dire capable notamment d'avoir la capacité d'automatiser la formulation dynamique de propositions faites en réponse à des requêtes d'appel d'offre formulées par des clients, et capable en outre de procéder à une négociation automatique des termes d'un accord entre chaque prestataire et l'émetteur de l'appel d'offre.

Ainsi, selon l'invention, il est proposé un portail de mise en relation d'entrepreneurs et d'aide à la réalisation d'accords entre les entrepreneurs, comprenant un intergiciel adapté pour la mise en communication du portail avec des registres de services accessibles par l'intermédiaire d'un réseau informatique dans lesquels sont stockées des informations relatives à des prestations proposées par des entrepreneurs prestataires et une plate-forme de recherche de prestataires et d'élaboration de propositions en réponse à des requêtes d'appel d'offres formulées par des utilisateurs

Selon une caractéristique générale de ce portail, la plate-forme de recherche est une plate-forme d'agents logiciels ou un ensemble de plate-formes d'agents logiciels connectées par un réseau dont les agents sont associés respectivement à une partie au moins des entrepreneurs et aux utilisateurs et sont adaptés pour rechercher un ou plusieurs prestataires correspondant à une requête formulée par un utilisateur et pour l'établissement conjoint d'un accord entre un utilisateur et le ou chaque prestataire correspondant à la requête.

On conçoit dès lors que l'utilisation d'agents logiciels, qui peuvent être investis de la part de la partie qu'ils représentent d'une capacité de prise de décision et de négociation, permet de rendre automatiques, d'une part, le lancement d'appels d'offres et la formulation de réponses à ces appels d'offres par des prestataires intéressés et, d'autre part, la négociation des termes d'un accord entre un utilisateur émetteur de l'appel d'offre et les entrepreneurs prestataires correspondants.

Une infrastructure de commerce électronique inter-entreprises utilisant un portail conforme à l'invention permet ainsi la réalisation de places de marchés intégrant des mécanismes automatisés d'appels d'offres dans lesquels les propositions faites en réponse à ces appels d'offres sont ajustées, voire construites en fonction des demandes et peuvent le cas échéant faire l'objet de négociations plus ou moins automatisées. Les propositions peuvent être effectuées en fonction d'informations sur les prestataires publiées et mises à jour via internet, et donc au niveau mondial, dans des registres de type UDDI et ebXML. Les accords passés entre agents assurant des fonctions d'assistants électroniques sont publiés dans les registres ebXML

Selon une caractéristique de ce portail, la plate-forme de recherche de prestations comporte au moins un agent d'interface recevant, en entrée, les requêtes formulées par les tiers utilisateurs et comportant des moyens d'analyse des requêtes.

Selon une autre caractéristique de ce portail, la plate-forme d'agents logiciels comporte en outre des assistants électroniques à chacun desquels est associé un entrepreneur prestataire d'une partie au moins desdits entrepreneurs, lesdits assistants électroniques étant adaptés pour communiquer avec l'agent d'interface et pour l'élaboration automatique de propositions en réponse à des appels d'offre en provenance de l'agent d'interface en fonction des informations contenues dans le registre de services.

Les moyens d'analyse des requêtes comportent, selon un mode de réalisation, des moyens pour décomposer chacune des requêtes en un ensemble de prestations à effectuer pour la réalisation d'une tâche correspondant à ladite requête.

Ces moyens pour décomposer les requêtes comportent par exemple un service d'ontologie adapté pour traiter l'ensemble des prestations susceptibles d'être proposées à des tiers utilisateurs en subdivisant chacune desdites prestations en prestations élémentaires associées à des métiers correspondants.

Comme cela sera détaillé par la suite, une ontologie est analogue à un dictionnaire ou glossaire, mais avec selon une structure et niveau de détail permettant à son contenu d'être calculé par un ordinateur.

Selon une autre caractéristique de l'invention, la plate-forme d'agents comporte en outre des moyens pour communiquer avec les entrepreneurs pour leur transmettre des requêtes formulées par des utilisateurs.

Les registres de services et la plate-forme d'agents logiciels sont avantageusement mis en communication par l'intermédiaire d'une architecture logicielle de communication de couche intermédiaire s'appuyant sur le protocole SOAP.

Selon l'invention, il est également proposé un procédé de mise en relation d'entrepreneurs et d'aide à la réalisation d'accords entre les entrepreneurs, mis en oeuvre au moyen d'un portail tel que défini ci-dessus.

Un tel procédé comporte les étapes suivantes :
- élaboration, par un utilisateur, d'une requête d'appel d'offres en vue d'obtenir, de la part d'entrepreneurs prestataires ou d'assistants électroniques les représentant, des propositions en réponse à cette requête ;
- réception de la requête par l'agent d'interface ;
- analyse de la requête pour en déduire la liste des types de prestataires devant intervenir pour la réalisation de la prestation ; et
- interrogation des registres de services pour la recherche de l'ensemble des prestataires correspondant à la prestation à réaliser.

Selon un mode de mise en oeuvre, l'étape d'interrogation des registres de services comporte une étape d'élaboration, par l'agent d'interface, d'un appel d'offres de prestation pour chacun desdits prestataires et de transmission de cet appel d'offres à un agent associé au prestataire, et une étape d'élaboration d'une proposition en réponse à l'appel d'offres formulé par l'agent d'interface et transmission de cette réponse à cet agent d'interface.

L'agent associé au prestataire est un assistant électronique associé au prestataire. Au cours de l'étape d'élaboration de la réponse, l'assistant électronique procède à une proposition en fonction des informations stockées dans le registre de services. La proposition peut être réalisée par l'entrepreneur sollicité par son assistant électronique ou par l'assistant électronique lui-même. L'assistant électronique peut à son tour si nécessaire procéder à un appel à proposition. Une contre-proposition, acceptée ou refusée par l'assistant électronique peut être formulée par l'agent d'interface, puis à son tour en réponse par l'assistant électronique.

En effet, le procédé peut en outre comporter une étape de mise en communication avec le prestataire pour lui fournir des informations relatives aux termes d'une proposition formulée par l'agent d'interface.

L'agent associé au prestataire peut également constituer un agent de contact du prestataire. Au cours de l'élaboration de la réponse, cet agent établit une communication avec le prestataire pour lui transmettre l'appel d'offres.

Selon un mode de mise en oeuvre particulier, ce procédé comporte une étape de mémorisation des conditions de l'accord dans un registre d'accord, après réalisation de celui-ci.

D'autres buts, caractéristiques et avantages de l'invention apparaîtront à la lecture de la description qui va suivre, donnée uniquement à titre d'exemple non limitatif, et faite en référence aux dessins annexés sur lesquels :
- la figure 1 est un schéma synoptique illustrant la structure générale d'un portail de mise en relation d'entrepreneurs et d'aide à la réalisation d'accords entre les entrepreneurs conforme à l'invention ;
- la figure 2 est un organigramme illustrant le dialogue s'établissant entre l'agent d'interfaces et les assistants électroniques des prestataires au cours du lancement d'un appel d'offre et au cours de la négociation des termes d'un accord ; et
- les figures 3 à 8 sont des copies d'écran obtenues au moyen d'un portail selon l'invention.

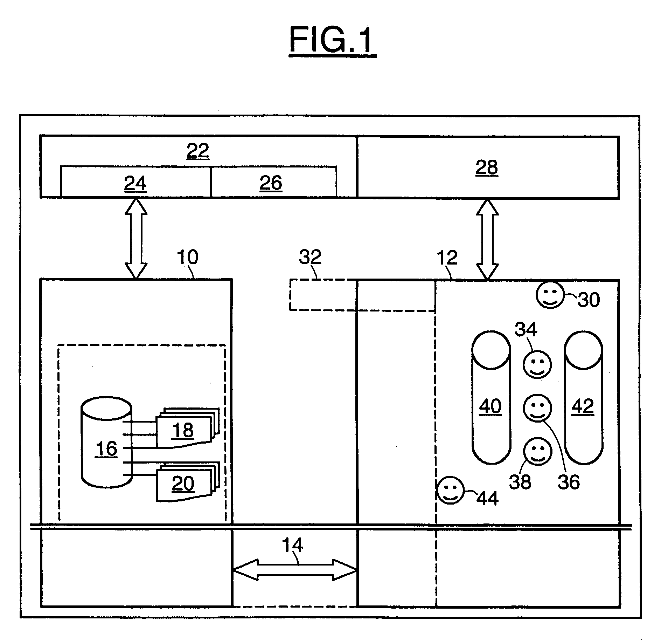

Sur la figure 1, on a représenté la structure générale d'un portail de mise en relation d'entrepreneurs et d'aide à la réalisation d'accords entre les entrepreneurs conforme à l'invention.

En se référant à cette figure, le portail est destiné à permettre l'accès à des registres de services 10 dans lequel sont stockées des informations relatives à des prestations proposées par des prestataires. Il comporte essentiellement une plate-forme de recherche de prestataires 12 accessible par des tiers utilisateurs pour l'interrogation des registres 10 pour la recherche de prestataires et, comme cela sera décrit en détail par la suite, l'élaboration de proposition en réponse à des requêtes d'appel d'offres formulées par des utilisateurs.

De manière générale, les registres de services incorporent des informations de type pages jaunes et blanches sur les entrepreneurs. Ils incorporent en outre des documents XML décrivant les protocoles de coopération (CPP) acceptés par l'entrepreneur et les accords établis avec d'autres prestataires, et des API permettant d'invoquer à distance des services Web spécifiques tels que des services de notification, de commande, de contact. Ces registres de services peuvent également être reliés à des registres d'accord et fournir des informations sur les API (par exemple l'API d'un service de notification par courrier électronique). Ils sont accessibles via le réseau Internet et sont consultables par l'intermédiaire d'un intergiciel réalisant une interface entre le portail et le réseau Internet.

L'interrogation des registres de services 10 s'effectue en utilisant des interfaces standard de consultation de ces registres qui sont basés sur des mécanismes de type question/réponse. Cette interrogation s'effectue également automatiquement par un autre biais en formulant des appels d'offre sous la forme d'appels à propositions, le portail recherchant alors automatiquement les prestataires susceptibles de répondre favorablement à ces appels d'offre et élaborant des propositions de transaction en réponse à ces appels à propositions.

Dans le cadre de la présente description, par «appel à propositions», on entend une prestation à réaliser ainsi que des conditions de réalisation de cette prestation, telles que des conditions portant sur la qualité, les délais, la quantité de produits commandés, ...Ces conditions constituent des critères de sélection lorsque plusieurs réponses concurrentes sont proposées par des prestataires aptes à fournir des prestations susceptibles de satisfaire le client. Elles peuvent porter sur des processus de réalisation à suivre avec un niveau d'abstraction plus ou moins élevé.

Dans le but d'automatiser la recherche des prestataires, la formulation des propositions, ainsi que, le cas échéant, les négociations entre les parties, conformément à une caractéristique de l'invention, la plate-forme de recherche de prestataires est une plate-forme d'agents logiciels ou un ensemble de plate-formes d'agents connectées par un réseau, c'est-à-dire un système multi-agents ou SMA.

Les systèmes multi-agents sont des systèmes bien connus de l'homme du métier. Ils ne seront donc pas décrits en détail par la suite. On notera néanmoins qu'un agent logiciel est un module logiciel capable d'agir sans qu'il ait été expressément sollicité.

Comme indiqué précédemment, le registre de services 10 et la plate-forme d'agents 12 communiquent par l'intermédiaire d'une architecture logicielle 14 de communication de couches intermédiaires, appelée par l'homme du métier intergiciel, s'appuyant sur le protocole SOAP, laquelle permet l'interopérabilité des registres 10 et de la plate-forme 12.

En ce qui concerne les registres de services ceux-ci comportent essentiellement un annuaire 16 référençant des pages jaunes et blanches ainsi que l'ensemble des services Web disponibles. Ce registre est accessible par les entrepreneurs pour l'enregistrement d'informations portant sur les services qu'ils offrent ainsi que des informations sur les processus d'échange à suivre pour utiliser ces services. Cet annuaire est basé sur des registres UDDI et ebXML, c'est-à-dire des registres qui contiennent des documents écrits en langage de balisage extensible XML.

On voit en effet sur cette figure 1 que l'annuaire 16 regroupe des documents CPP 18 contenant l'ensemble des prestations proposées par les prestataires et des informations respectives correspondant à des conditions d'un accord acceptable par le prestataire.

De même, l'annuaire 16 regroupe des documents CPA 20 dans lesquels sont stockées des informations relatives à des transactions préalablement effectuées.

Ces documents CPP et CPA sont organisés selon une architecture arborescente et peuvent être consultés par l'intermédiaire d'un navigateur 22 lequel incorpore un catalogue de services 24 pouvant le cas échéant être associé à un moteur de recherche 26.

Ce navigateur 22 est accessible, d'une part, par les prestataires pour l'enregistrement de documents CPP 18 de manière à stocker dans l'annuaire 16 des informations relatives aux capacités qu'ils offrent à fournir une prestation de services donnée suivant certaines modalités et, d'autre part, à des clients potentiels pour la recherche de prestataires capables d'offrir une prestation suivant des modalités données.

En ce qui concerne la plate-forme de recherche de prestations 12, comme indiqué précédemment, celle-ci comporte essentiellement un ensemble d'agents logiciels destinés à communiquer pour, d'une part, rechercher des prestataires susceptibles de proposer une prestation correspondant à une requête d'appel d'offre formulée par un client, et, d'autre part, le cas échéant, de négocier automatiquement les termes d'un accord entre le ou les prestataires et le client.

Comme on le voit sur cette figure 1, cette ou ces plate-formes d'agents 12 est associée à une interface 28 permettant à un utilisateur d'élaborer un message d'appel d'offres ou d'appel à propositions selon un standard adapté pour interagir avec les agents logiciels de la plate-forme d'agents 12. Par exemple, le format utilisé pour l'élaboration des appels à proposition est un format défini selon un standard défini par la fondation FIPA («Foundation for Intelligent Physical Agents», en anglais). L'appel à proposition, ainsi élaboré, constitue une description d'une prestation à réaliser ainsi que des conditions de cette réalisation, telles que des conditions portant sur la qualité, les délais, la quantité de produits commandés,...

Après avoir été élaboré, cet appel à propositions est fourni à un premier agent logiciel 30, constitué par un agent d'interface, pour être analysé et traité. Pour procéder à l'analyse des appels à proposition, la plate-forme de recherche de prestation 12 comporte un module logiciel ou est interface à un module logiciel dit «d'ontologie» capable de décomposer chacun des appels à proposition en un ensemble de prestations à effectuer et de décomposer successivement chaque prestation en prestations plus élémentaires associées à des métiers, pour la réalisation d'une tâche correspondant à l'appel à proposition.

Ce module logiciel, désigné par la référence numérique générale 32 constitue un service dit d' « ontologie » effectuant une décomposition des prestations.

Comme indiqué précédemment, une ontologie est analogue à un dictionnaire ou un glossaire, mais comporte un niveau de détails et une structure qui rend son contenu susceptible d'être calculé par un calculateur. Une ontologie est définie par l'explicitation d'un vocabulaire des termes de base (une taxonomie) et une spécification précise (de préférence formelle) de la signification de ses termes. Une ontologie définit les relations permettant d'établir des inférences logiques entre ses termes. Elle définit de préférence un domaine par des relations entre des termes de base plutôt que par l'introduction de termes spécifiques. La formalisation de l'ontologie s'appuie sur un langage de représentation de connaissances et sur l'identification de concept générique à toute expression (par exemple événement, processus, organisme, chose non-vivante, etc.).

Dans le portail conforme à l'invention, comme cela sera décrit par la suite, l'ontologie d'un secteur d'activité est décrite de façon arborescente. Une activité professionnelle est composée de plusieurs sous-activités pouvant elles-mêmes être décomposées en sous-activités qui à leur tour sont décomposables. Les activités ou sous-activités correspondent à des secteurs d'activité ou à des professions. Pour obtenir une prestation correspondant à une activité particulière, le portail cherche un entrepreneur ayant une compétence dans ce domaine d'activité, ou un ensemble d'entrepreneurs capables de réaliser la prestation dans les sous-activités qui lui sont associées, c'est-à-dire selon un processus de spécialisation et de décomposition. Il peut également rechercher un entrepreneur capable de réaliser une activité plus générique, c'est-à-dire selon un processus de généralisation.

Ainsi, après traitement au moyen de ce module logiciel 32, l'agent d'interface 30 détermine l'ensemble des prestataires, c'est-à-dire par exemple les corps de métiers et les compétences, devant contribuer à élaborer une proposition en réponse à l'appel à proposition. L'appel à proposition ou appel d'offre est dès lors décomposé, à ce stade, en un ensemble de tâches à accomplir par différents prestataires.

Comme on le voit sur la figure 1, la plate-forme d'agent logiciel 12 comporte également des assistants électroniques 34, 36 et 38, constitués également par des agents logiciels associés chacun à un prestataire susceptible de répondre à un appel d'offre.

Ces agents assistants 34, 36 et 38 sont associés à un annuaire de compétences 40 et à un annuaire d'adresses 42 dans lesquels sont stockées des informations relatives au prestataire qu'ils représentent. L'annuaire 40 est mis à jour via l'architecture logicielle 14 en fonction des données de l'annuaire 16. Les agents assistants intègrent des fonctionnalités de contact pour communiquer avec leur prestataire associé, afin de l'avertir ou de le consulter.

Pour les prestataires qui ne sont pas pourvus de tels agents assistants, il est prévu un ou plusieurs agent(s) de contact 44 capables chacun d'entrer en communication avec un prestataire qui lui est associé, par exemple par courrier électronique, d'une part pour lui faire part d'un appel d'offre et, d'autre part, pour transmettre à l'agent d'interface 30 une proposition élaborée par le prestataire qu'il représente.

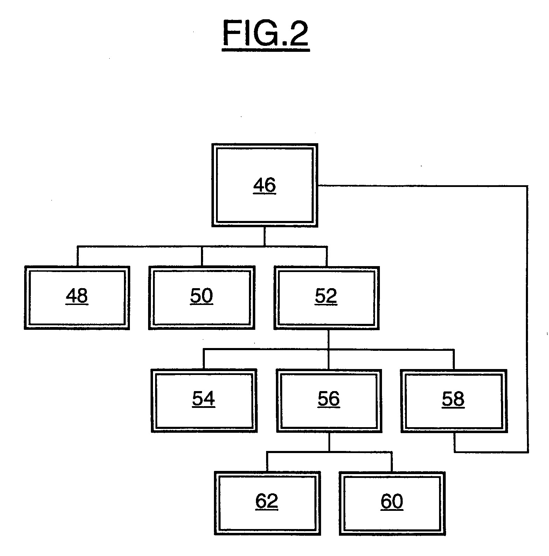

En se référant maintenant à la figure 2, le portail qui vient d'être décrit s'utilise de la façon suivante.

Tout d'abord, en préalable, il convient que les prestataires enregistrent dans la plate-forme B2B leur capacité à utiliser un assistant électronique. En effet, comme indiqué précédemment, certains prestataires ou entrepreneurs disposent d'un assistant électronique 34, 36 ou 38 supporté par un agent logiciel de la plate-forme d'agents 12 : un tel assistant est capable automatiquement de considérer des informations telles que des disponibilités, de personnaliser des décisions, par exemple en modifiant des critères de réponse à des appels à proposition en fonction de la taille du marché proposé, des délais,...

Des documents CCP 18 sont alors élaborés conformément au format de description de services de la plate-forme de commerce électronique 10. Outre les capacités des prestataires à répondre à des appels d'offres, ces documents CCP 18 mentionnent l'identifiant de l'agent, , ainsi que des protocoles de communication connus de l'agent. Ces documents sont alors enregistrés dans l'annuaire de services 16 de la plate-forme de commerce 10. A l'issue de cette phase préalable, l'annuaire 16, qui reste configurable en temps réel, dispose d'informations relatives à chaque prestataire préalablement identifié, en termes d'adresse, de prestations fournies, de disponibilité, de terme d'une transaction acceptable par chaque prestataire.

Un tiers utilisateur souhaitant lancer un appel d'offre formule alors un appel à proposition (étape 46).

Comme indiqué précédemment, cet appel à proposition est analysé par l'agent d'interface 30 lequel détermine, à l'aide du module d'ontologie 32 les types de prestataires pouvant contribuer à l'élaboration d'une proposition en réponse à cet appel à proposition, en décomposant l'appel d'offre en un ensemble de tâches pouvant être accomplies par différents prestataires. A l'issue de cette étape d'analyse de l'appel à proposition, un ou plusieurs agents logiciels, par exemple l'agent d'interface, interrogent les registres de services 10 de manière à rechercher les types de prestataires préalablement identifiés.

En réponse, la plate-forme 10 transmet à l'agent d'interface 30 la liste des agents, assistants électroniques et agents de contacts, correspondant à des prestataires ou entrepreneurs susceptibles d'effectuer les tâches correspondant à un appel à proposition, ainsi que leurs capacités et compétences.

L'agent d'interface 30 adresse alors des appels à proposition de réalisations de tâches données aux assistants électroniques 34, 36 et 38 des prestataires ou à l'agent de contact 40 pour les prestataires dépourvus d'assistant électronique. En réponse, lors des étapes 48, 50 et 52, les assistants électroniques 34, 36 et 38 des prestataires concernés déterminent de façon automatique et/ou après consultation de leurs prestataires ou entrepreneurs, s'il convient de répondre favorablement à cet appel à proposition en formulant une proposition donnée en fonction des informations dont ils disposent. Ainsi, en réponse à cet appel à proposition, ils peuvent soit transmettre à l'agent d'interface 30 un message traduisant une non-compréhension de l'appel à proposition (étape 48), ou refuser l'appel à proposition (étape 50) ou proposer une proposition répondant aux critères de l'appel d'offres, ou encore proposer une transaction selon de nouvelles conditions (étape 52), par exemple en modifiant les délais, les quantités de produits considérées, ...

Parallèlement, les réponses fournies par l'agent de contact 44, provenant du prestataire lui-même, sont transmises à l'agent d'interface.

Celui-ci, lors des étapes 54, 56 et 58 suivantes considère l'ensemble des propositions reçues et formule une ou plusieurs réponses à l'appel à proposition. Il peut soit rejeter la proposition (étape 56) soit modifier les termes de la transaction (étape 58), ou encore refuser la proposition en réemettant un nouvel appel à proposition (étape 58). A l'issue de ces étapes, la transaction peut soit aboutir (étape 60) soit échouer (étape 62).

Dans le cas où la transaction aboutit, les termes de la transaction sont mémorisés dans l'annuaire de services 16, sous la forme de documents CPA 20, comme indiqué précédemment.

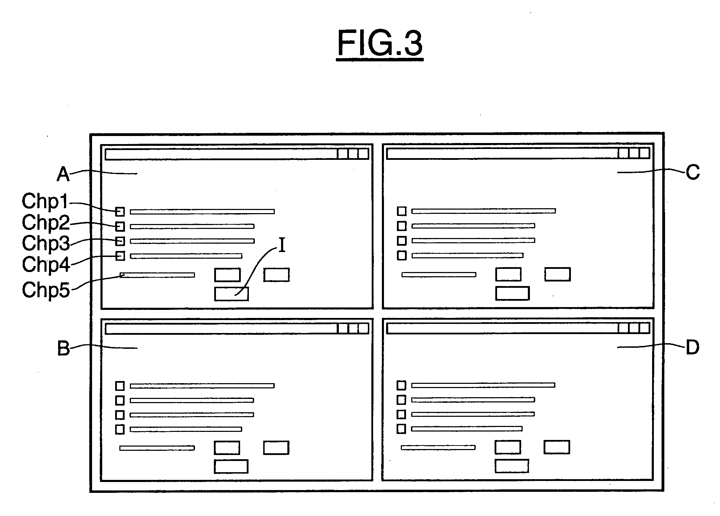

On va maintenant décrire en référence aux figures 3 à 8 des copies d'écran obtenues au moyen d'un portail de mise en relation d'entrepreneurs et d'aide à la réalisation d'accord conformes à l'invention.

En se référant tout d'abord à la figure 3, il est fourni aux différents prestataires des interfaces permettant de personnaliser les prises de décisions des assistants électroniques qu'ils ont à leur disposition.

Dans la suite de la description, on considèrera que le domaine d'application de l'invention porte sur l'édition de disques compacts CD multimédia.

La figure 3 montre que des assistants électroniques associés à des entrepreneurs d'édition multimédia, d'édition en général, de graphisme et de production peuvent être configurés au moyen de fenêtres A, B, C et D respectives. Les options de personnalisation, représentées par des champs chp1, chp2, chp3 et chp4 portent, à titre d'exemple, sur l'acceptation de tâches correspondant à des compétences plus spécifiques que les compétences publiées dans l'annuaire par l'entrepreneur, ainsi que sur des modalités de notification, (souhait d'être informé si une tâche plus spécifique a été refusée ou acceptée, souhait d'être informé si plusieurs tâches se chevauchent), respectivement. Un champ additionnel (chp5), peut être prévu pour personnaliser la durée effective des tâches pour lesquelles les prises de décision peuvent être dévolues aux assistants électroniques. Un icône I permet la validation de la configuration.

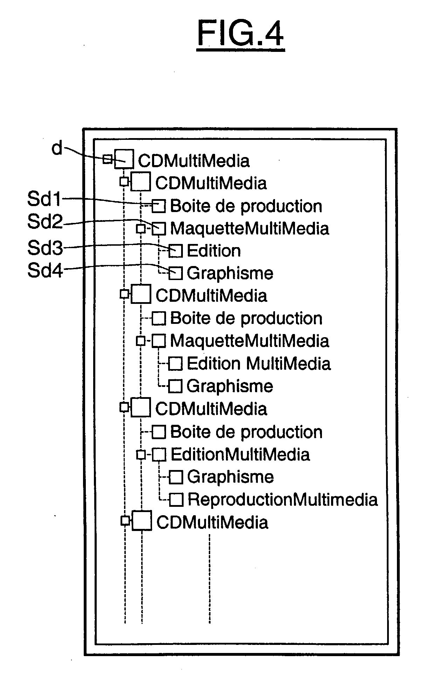

La figure 4 montre, quant à elle, à titre d'exemple, différentes résolutions d'un appel à proposition correspondant à différentes représentations ontologiques du domaine. Comme indiqué précédemment, l'appel à proposition porte sur la réalisation d'un CD multimédia (domaine d). Ainsi, ce domaine d est subdivisé en quatre sous-domaines Sd1, Sd2, Sd3 et Sd4.

Selon un premier cas de figure, qui correspond à une première décomposition de ce domaine d, les sous-domaines correspondent respectivement aux domaines suivants : « boîtes de production », et « maquettes multimédia », lequel sous-domaine est à son tour décomposé en sous-domaines « édition » et »graphisme ». Ainsi, trois appels d'offres seront envoyés pour rechercher des compétences de production, d'édition et de graphisme.

Dans un deuxième cas de figure, le domaine d de la production d'un CD multimédia est décomposé en domaines « boîte de production » et maquette multimédia. Cependant, dans ce cas, le sous-domaine « maquettes multimédia » est défini comme la composition d'un sous-domaine « édition multimédia » et d'un sous-domaine « graphisme ».

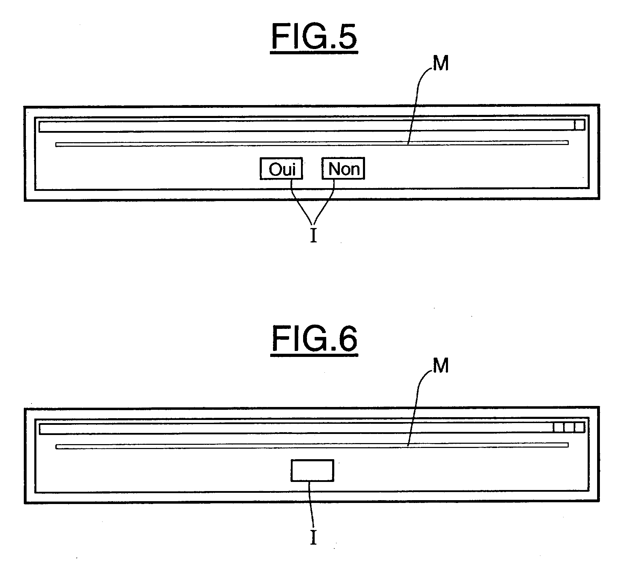

En se référant maintenant à la figure 5, lorsque des assistants électroniques répondent à des appels d'offres, ceux-ci transmettent à l'entrepreneur qui leur est associé un message les informant qu'ils ont répondu à un appel d'offre, par exemple sur des compétences plus spécifiques. Un tel message peut également être envoyé à des entrepreneurs par leurs assistants électroniques pour valider l'envoi de propositions en réponse à des appels d'offres ainsi que, comme visible sur la figure 6, pour notifier aux entrepreneurs la programmation de nouvelles tâches. Ces messages sont associés à un icône I permettant la validation de l'offre ou l'élaboration d'un accusé de réception.

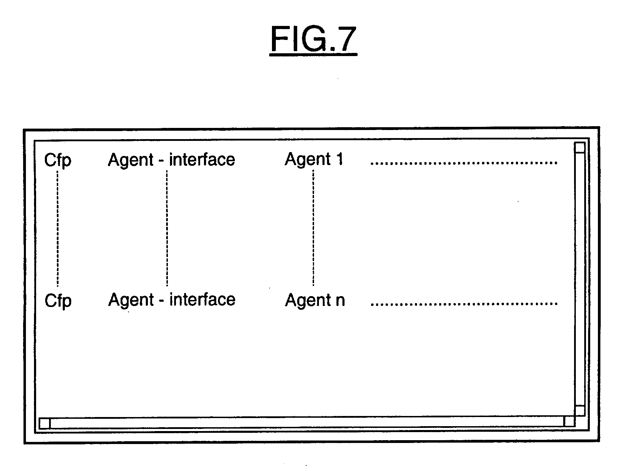

Sur la figure 7, on a représenté une visualisation des messages échangés entre l'agent d'interfaces et les assistants électroniques des entrepreneurs.

Comme on le voit sur cette figure, l'agent d'interface « agent_interface » transmet aux agents agent1,..., agentn des appels à proposition Cfp pour leur demander d'établir des propositions en réponse aux appels d'offres.

Comme indiqué précédemment, en réponse ceux-ci émettent des propositions ou au contraire refusent.

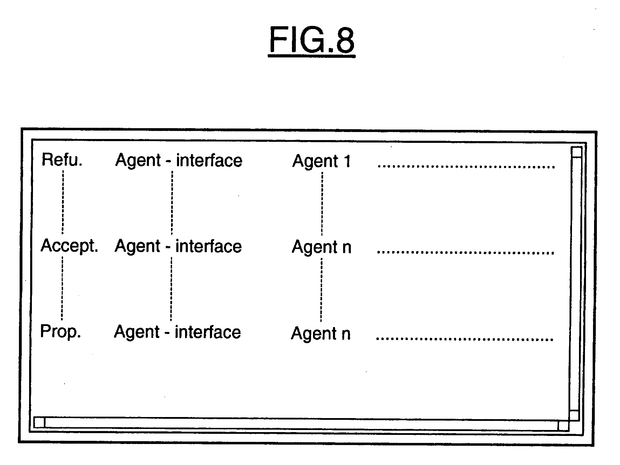

On a représenté sur la figure 8 les réponses ainsi transmises par les agents agent1,..., agentn à l'agent d'interface « agent_interface » pour soit refuser l'appel à proposition, soit l'accepter, soit établir une autre proposition.

## Revendications

1. Portail de mise en relation d'entrepreneurs et d'aide à la réalisation d'accords entre les entrepreneurs par l'intermédiaire du réseau Internet, comprenant un intergiciel (14) adapté pour la mise en communication du portail avec des registres de services (10) accessibles par l'intermédiaire d'un réseau informatique dans lesquels sont stockées des informations relatives à des prestations proposées par des entrepreneurs prestataires et une plate-forme (12) de recherche de prestataires et d'élaboration de propositions en réponse à des requêtes d'appel d'offres formulées par des utilisateurs, **caractérisé en ce que** la plate-forme de recherche est une plate-forme d'agents ou un ensemble de plate-formes d'agents connectées par un réseau (logiciels) dont les agents (30, 34, 36, 38, 44) sont associés respectivement à une partie au moins des entrepreneurs et aux utilisateurs et sont adaptés pour rechercher un ou plusieurs prestataires correspondant à une requête formulée par un utilisateur et pour l'établissement conjoint d'un accord entre un utilisateur et le ou chaque prestataire correspondant à la requête.

2. Portail selon la revendication 1, **caractérisé en ce que** la plate-forme (12) de recherche de prestations comporte au moins un agent d'interface (30) recevant, en entrée, les requêtes formulées par les tiers utilisateurs et comportant des moyens d'analyse des requêtes.

3. Portail selon la revendication 2, **caractérisé en ce que** la plate-forme d'agents logiciels comporte en outre des assistants électroniques (34, 36, 38) à chacun desquels est associé un entrepreneur prestataire d'une partie au moins desdits entrepreneurs, lesdits assistants électroniques étant adaptés pour communiquer avec l'agent d'interface (30) et pour l'élaboration partiellement ou entièrement automatique de propositions en réponse à des appels d'offre en provenance de l'agent d'interface en fonction des informations contenues dans le registre de services.

4. Portail selon l'une des revendications 2 et 3, **caractérisé en ce que** les moyens d'analyse des requêtes comportent des moyens (32) pour décomposer chacune des requêtes en un ensemble de prestations à effectuer pour la réalisation d'une tâche correspondant à ladite requête.

5. Portail selon la revendication 4, **caractérisé en ce que** les moyens pour décomposer les requêtes comportent un service d'ontologie (32) adapté pour traiter l'ensemble des prestations susceptibles d'être proposées à des tiers utilisateurs en subdivisant chacune desdites prestations en prestations élémentaires associées à des métiers correspondants.

6. Portail selon l'une quelconque des revendications 1 à 5, **caractérisé en ce que** la plate-forme (12) d'agents comporte en outre des agents logiciels de contact (44) adaptés pour communiquer avec les entrepreneurs pour leur transmettre des requêtes formulées par des agents.

7. Portail selon l'une quelconque des revendications 1 à 6, **caractérisé en ce que** les registres de services (10) et la plate-forme d'agents logiciels (12) sont mis en communication par l'intermédiaire d'une architecture logicielle (14) de communication de couche intermédiaire s'appuyant sur le protocole SOAP.

8. Procédé de mise en relation d'entrepreneurs et d'aide à la réalisation d'accords entre les entrepreneurs, mis en oeuvre au moyen d'un portail selon l'une quelconque des revendications 1 à 7, **caractérisé en ce qu'**il comporte les étapes suivantes :
- élaboration, par un utilisateur, d'une requête d'appel d'offres en vue d'obtenir, de la part d'entrepreneurs prestataires ou d'assistants électroniques les représentant, des propositions en réponse à cette requête ;
- réception de la requête par l'agent d'interface (30) ;
- analyse de la requête pour en déduire la liste des prestataires devant intervenir pour la réalisation de la prestation ; et
- interrogation des registres de services (10) pour la recherche de l'ensemble des prestataires correspondant à la prestation à réaliser.

9. Procédé selon la revendication 8, **caractérisé en ce qu'**il comporte en outre une étape d'élaboration, par l'agent d'interface (30), d'un appel d'offres de prestation pour chacun desdits prestataires et de transmission de cet appel d'offres à un agent (34, 36, 38) associé au prestataire, et une étape d'élaboration d'une proposition en réponse à l'appel d'offres par l'agent d'interface et transmission de cette réponse à l'agent d'interface.

10. Procédé selon la revendication 9, **caractérisé en ce que** l'agent associé au prestataire (34, 36, 38) est un assistant électronique associé au prestataire, et **en ce qu'**au cours de l'étape d'élaboration de la réponse, l'assistant électronique procède à l'élaboration de la proposition en fonction des informations stockées dans le registre de services.

11. Procédé selon la revendication 10, **caractérisé en ce qu'**il comporte en outre une étape d'élaboration, par l'agent d'interface, d'une contre proposition et une étape d'acceptation ou de refus de cette contre proposition, par ledit agent d'interface (34, 36, 38).

12. Procédé selon l'une des revendications 9, 10 et 11, **caractérisé en ce qu'**il comporte en outre une étape de mise en communication avec le prestataire pour lui fournir des informations relatives aux termes d'une proposition formulée par l'agent d'interface.

13. Procédé selon la revendication 9, **caractérisé en ce que** l'agent associé au prestataire est un agent de contact (44) du prestataire, et **en ce qu'**au cours de l'élaboration de la réponse, l'agent de contact établit une communication avec le prestataire pour lui transmettre la proposition.

14. Procédé selon l'une quelconque des revendications 8 à 13, **caractérisé en ce qu'**il comporte une étape de mémorisation des conditions de l'accord dans un registre d'accord (20), après réalisation de celui-ci.
